# EUROPÄISCHE PATENTANMELDUNG

(11) **EP 2 068 213 A1**
(43) Veröffentlichungstag der Anmeldung: **10.06.2009**
(21) Anmeldenummer: 07023590.8
(22) Anmeldetag: 05.12.2007
(51) Int. Cl.: G05B 19/042, G06F 1/32

(54) **Fertigungseinrichtung mit drahtlosem Sensor**

(71) Anmelder: SIEMENS AKTIENGESELLSCHAFT, 80333 München (DE)
(72) Erfinder: Grosch, Thomas, 90513 Zirndorf (DE); Kiesel, Bruno, 91058 Erlangen (DE)

(57) **Zusammenfassung**

Die Erfindung betrifft eine Fertigungseinrichtung (1), umfassend:
- eine Fertigungsmaschine (3) zur Durchführung eines Fertigungsschrittes in einem Fertigungsabschnitt (13) an einem Produktteil (5),
- eine Steuerung (7) für den Fertigungsabschnitt (13),
- ein Fertigungsdatensystem (9) zur Erfassung von Betriebszuständen der Fertigungseinrichtung (1),
- einen Sensor (11) zur Aufnahme eines Messwertes für die Steuerung (7),

wobei der Sensor (11) drahtlos mit einem autarken Energiespeicher (15) ausgeführt ist und in einem Aktivitätszyklus (Z) arbeitet, welcher Aktivphasen (A) und Ruhephasen (R) aufweist und dass ein zeitlicher Ruheanteil (T) der Ruhephasen (R) am Aktivitätszyklus (Z) einstellbar ist und wobei die Einstellung des Ruheanteils (T) zu einem Betriebszeitpunkt (t₁) abhängig von einem aus dem Fertigungsdatensystem (9) abgeleiteten Erwartungs-Betriebszustand (B) zu diesem Betriebszeitpunkt (t₁) erfolgt.

## Beschreibung

Die Erfindung betrifft eine Fertigungseinrichtung, umfassend eine Fertigungsmaschine zur Durchführung eines Fertigungsschrittes in einem Fertigungsabschnitt an einem Produktteil, eine Steuerung für einen Fertigungsabschnitt, ein Fertigungsdatensystem zur Erfassung von Betriebszuständen der Fertigungseinrichtung und einen Sensor zur Aufnahme eines Messwertes für die Steuerung. Die Erfindung betrifft auch ein Verfahren zum Betrieb einer solchen Fertigungseinrichtung.

In Fertigungseinrichtungen kommen eine Vielzahl von unterschiedlichen Sensoren zum Einsatz. Die Komplexität einer solchen Sensorik führt zu einem erheblichen Verkabelungsaufwand. Um sowohl die Zeit einer Inbetriebsetzung als auch die Kosten eines solchen Sensornetzwerkes zu senken, wird verstärkt diskutiert, drahtlose Sensoren zu verwenden. Ein Nachteil solcher drahtlosen Sensoren ist jedoch in der Regel deren begrenzter Energiespeicher. Auch wenn manche Sensoren zur Aufnahme externer Energie ausgelegt sind, etwa durch eine Fotovoltaik-Energieaufnahme, so sind doch die dabei aufgenommenen Energiemengen in vielen Fällen nicht ausreichend. In diesen Fällen muss der Sensor durch eine Batterie versorgt werden. Ein häufigerer Wechsel dieser Batterie würde wiederum zu einer Unwirtschaftlichkeit eines Drahtlossensors führen. Es ist daher wünschenswert, den Energiebedarf eines solchen drahtlosen Sensors so gering wie möglich zu halten.

In dem Artikel "An Architecture for Energy Management in Wireless Sensor Networks", International Workshop on Wireless Sensor Network Architecture, Cambridge, USA, 24. April 2007, ist eine Architektur für ein Energiemanagement in einem Sensornetzwerk beschrieben. Die Größe Energie wird bei dieser Architektur in das Zentrum der Softwarearchitektur des Sensornetzwerkes gestellt. Durch eine solche Architektur wird die Programmierung eines Energiemanagements für Applikationen des Sensornetzwerkes erheblich vereinfacht.

In dem Artikel "Power-Efficient Adaptable Wireless Sensor Networks", Military and Aerospace Programmable Logic Devices, International Conference, Washington D.C., USA, 9.-11. Sept. 2003, wird beschrieben, wie in einer energieeffizienten Weise ein Sensornetzwerk an unterschiedlichen Hardwarebedingungen angepasst werden kann. Eine feste Steuerungslogik in Form eines integrierten Schaltkreises ist zwar energieeffizient, bietet aber nicht die nötige Anpassungsflexibilität. Andererseits ist eine freiprogrammierbare Steuerungslogik hinsichtlich der Energieeffizienz nachteilig gegenüber dem integrierten Schaltkreis. In dem Artikel wird eine Mischung dieser beiden Ansätze vorgeschlagen, wobei wesentliche Teile der Steuerungslogik als integrierter Schaltkreis vorliegen, und einige Teile der Steuerung durch eine schlank ausgeführte programmiere Steuerungslogik realisiert sind.

In dem Artikel "Adaptive sleeping and awakening protocol (ASAP) for energy efficient adhoc sensor networks", IEEE Internationl Conference on Communications, 16-20 May 2005, ist ein Sensornetzwerkprotokoll beschrieben. Zur Steigerung der Energieeffizienz wird vorgeschlagen, die Sensoren des Netzwerkes in bestimmten festgelegten Zeitabschnitten in einen Schlafmodus zu überführen. Dieser Schlagmodus soll allerdings nicht gemeinsam für alle Sensoren erfolgen, sondern erfolgt für einen Sensor in Abhängigkeit von den Übertragungen seiner Nachbarn, der Typologie der Nachbarsensoranordnung und der verbliebenen Batterielebenszeit.

Aufgabe der Erfindung ist die Angabe einer Fertigungseinrichtung, die sich durch eine besonders einfache Inbetriebnahme sowie einen geringen Wartungsaufwand auszeichnet. Weitere Aufgabe der Erfindung ist, die Angabe eines Verfahrens zum Betrieb einer solchen Fertigungseinrichtung.

Erfindungsgemäß wird die auf eine Fertigungseinrichtung gerichtete Aufgabe gelöst durch eine Fertigungseinrichtung, umfassend:
- eine Fertigungsmaschine zur Durchführung eines Fertigungsschrittes in einem Fertigungsabschnitt an einem Produktteil,
- eine Steuerung für den Fertigungsabschnitt,
- ein Fertigungsdatensystem zur Erfassung von Betriebszuständen der Fertigungseinrichtung,
- einen Sensor zur Aufnahme eines Messwertes für die Steuerung,
wobei der Sensor drahtlos mit einem autarken Energiespeicher ausgeführt ist und in einem Aktivitätszyklus arbeitet, welcher Aktivphasen und Ruhephasen aufweist, wobei ein zeitlicher Ruheanteil der Ruhephasen am Aktivitätszyklus einstellbar ist und wobei die Einstellung des Ruheanteils zu einem Betriebszeitpunkt abhängig von einem aus dem Fertigungsdatensystem abgeleiteten Erwartungs-Betriebszustand zu diesem Betriebszeitpunkt erfolgt.

Eine solche Fertigungseinrichtung weist durch den drahtlos ausgeführten Sensor eine geringe Zeit für die Inbetriebsetzung auf, wobei dieser Vorteil nicht etwa durch einen erhöhten Wartungsaufwand bei der Neuerung des Energiespeichers des Sensors zunichte gemacht wird, da durch die Anpassung der Ruhezeiten des Sensors an den Betriebszustand eine besonders hohe Energieeffizienz und damit Lebensdauer des Energiespeichers erreicht wird. Die Erfindung geht dabei von der Erkenntnis aus, dass die tatsächlich erforderlichen Aktivitätszeiten eines Sensors stark vom Betriebszustand der Fertigungseinrichtung abhängen. Durch die Ableitung eines zukünftigen Betriebszustandes können Ruhephasen für den Sensor abgeschätzt werden, in dem er in einen Schlafmodus überführt wird. Erst wenn der abgeleitete Betriebszustand eine Aktivität des drahtlosen Sensors erfordert, wird zum Eintritt des Betriebszustandes am Betriebszeitpunkt der Sensor aus dem Schlafmodus in den Aktivmodus versetzt. Denkbar ist aber auch, dass kein durchgehender Schlafmodus eingestellt wird, aber der Anteil der Ruhezeiten im Aktivitätszyklus vergrößert wird.

Bevorzugtermaßen ist der Sensor Teil eines Sensornetzwerkes, aufgebaut aus mehreren drahtlosen Sensoren. Der Vorteil des geringen Inbetriebsetzungsaufwandes multipliziert sich bei Verwendung eines ganzen Sensornetzwerkes.

Vorzugsweise ist das Fertigungsdatensystem Teil eines Manufacturing Excecution Systems, welches Fertigungsdaten zum Materialfluss und Verfügbarkeiten der Fertigungseinrichtung enthält, woraus der Erwartungsbetriebszustand ableitbar ist. Die Verwendung eines sogenannten Manufacturing Excecution Systems (MES) ist in größeren komplexeren Fertigungseinrichtungen mittlerweile weit verbreitet. Durch ein solches System kann in einer Fabrik der Materialfluss optimal gesteuert und die Auslastung der Fertigungsmaschinen optimal eingestellt werden. In ein solches MES-System gehen eine Vielzahl von Daten ein. Damit kann eine Aussage nicht nur über den gegenwärtig bestehenden Betriebszustand getroffen werden, sondern es kann auch eine Abschätzung hinsichtlich eines zukünftigen Betriebszustandes abgeleitet werden. Ist etwa aufgrund einer Materialflussunterbrechung absehbar, dass keine Produktteile zu einem bestimmten Zeitintervall in einem Fertigungsabschnitt bearbeitet werden können, so wird aufgrund des derart festgestellten zukünftigen Betriebszustandes der Sensor bzw. das Sensornetzwerk in diesem Fertigungsabschnitt in einen Schlafmodus versetzt bzw. die Ruhephasen im Aktivitätszyklus deutlich verlängert.

Bevorzugtermaßen ist das Fertigungsdatensystem mit einer Simulationsvorrichtung verbunden, mittels derer aus einem aktuell vorliegenden Betriebszustand der Erwartungsbetriebszustand simulierbar und damit prognostizierbar ist. Simulationen von Fertigungsabläufen gewinnen eine immer größere Bedeutung. Schon weit gediehen sind Werkzeuge und Verfahren mit denen Fertigungseinrichtungen und ganze Fabriken digital geplant und virtuell errichtet werden. Derartige ganzheitliche Simulationen und Modelle ermöglichen dann auch im Betrieb eine Simulation eines zukünftigen Betriebszustandes, abgeleitet aus den Daten des gegenwärtigen Betriebszustandes. Damit können, wie oben beschrieben, Ruhephasen für den Sensor bzw. das Sensornetzwerk in einem Fertigungsabschnitt passend eingestellt werden. Anders als bei reinen MES-Systemen können solche Simulationen zu einer zeitlich noch feiner aufgeteilten Weise Betriebszustände vorhersagen. So kann z.B. trotz eines im Mittel unveränderten Materialflusses eine normale Schwankung im Fertigungsablauf, also ein in üblicher Weise statistisch auftretender größerer Abstand zwischen zwei zu fertigen Produktteilen für die Einstellung der Ruhephasen des Sensors bzw. des Sensornetzwerkes genutzt werden.

Bevorzugtermaßen ist die Fertigungseinrichtung für eine diskrete Fertigung ausgelegt, das heißt, diskrete Produktteile durchlaufen nacheinander den Fertigungsabschnitt. Die Fertigungseinrichtung kann aber auch zur Fertigung eines nicht-diskreten Produktes ausgelegt sein. Hierbei wird also z.B. ein chemischer Stoff erzeugt. Es wird ein bestimmter Fertigungsprozess durchlaufen, bei dem in Abhängigkeit der Prozesswerte Drahtlossensoren, wie z.B. eine Füllstandsanzeige oder eine Temperaturmessung, unterschiedlich hohe Aktivitäten erfordern. Wird also aus dem abgeleiteten Betriebszustand deutlich, dass zu einem Zeitpunkt t₁ häufigere Temperaturmessungen erforderlich sind, so kann ein drahtloser Temperatursensor bis zu diesem Zeitpunkt t₁ in einem Ruhezustand verbleiben bzw. höhere Ruhephasen im Aktivitätszyklus aufweisen und wird zum Zeitpunkt t₁ in einen aktiveren Zustand versetzt.

Bevorzugtermaßen ist der Sensor als Positionssensor ausgeführt, durch den eine Position des Produktes bestimmbar ist. Gerade bei einer diskreten Fertigung sind häufig eine Vielzahl von Sensoren zur Positionsbestimmung des Produktteiles erforderlich. Hier könnte z.B. ein Radio Frequency Identification Device (RFID) oder ein optischer Sensor mit einer energiesparenden Leuchtdiode zum Einsatz kommen.

Erfindungsgemäß wird die auf ein Verfahren gerichtete Aufgabe gelöst durch Angabe eines Verfahrens zum Betrieb einer Fertigungseinrichtung, bei dem ein Produktteil, gesteuert über eine Steuerung, einen Fertigungsabschnitt mit einer Fertigungsmaschine durchläuft, wobei ein Fertigungsdatensystem einen Betriebszustand der Fertigungseinrichtung erfasst und wobei ein Sensor Messwerte für die Steuerung aufnimmt, wobei der Sensor drahtlos mit einem autarken Energiespeicher ausgeführt ist und in einem Aktivitätszyklus arbeitet, welcher Aktivphasen und Ruhephasen aufweist, wobei ein Erwartungsbetriebszustand der Fertigungseinrichtung zu einem Betriebszeitpunkt bestimmt wird und zu diesem Betriebszeitpunkt, abhängig vom Erwartungsbetriebszustand ein zeitlicher Ruheanteil der Ruhephasen am Aktivitätszyklus eingestellt wird.

Die Vorteile eines solchen Verfahrens entsprechen den obigen Ausführungen zu den Vorteilen der Fertigungseinrichtung.

Vorzugsweise ist bei einem Betriebszustand, welcher eine höhere zeitliche Veränderung der Position und der Eigenschaften des Produktteiles aufweist, der Ruheanteil niedriger, als bei einem Betriebszustand, welcher eine niedrigere zeitliche Veränderung der Position oder der Eigenschaften des Produktteiles aufweist.

Die Erfindung wird anhand der Zeichnung näher erläutert. Es zeigen teilweise schematisch und nicht maßstäblich:
- FIG 1: eine Fertigungseinrichtung für eine diskrete Produkt- fertigung und
- FIG 2: eine Fertigungseinrichtung für ein nicht-diskretes Produkt.

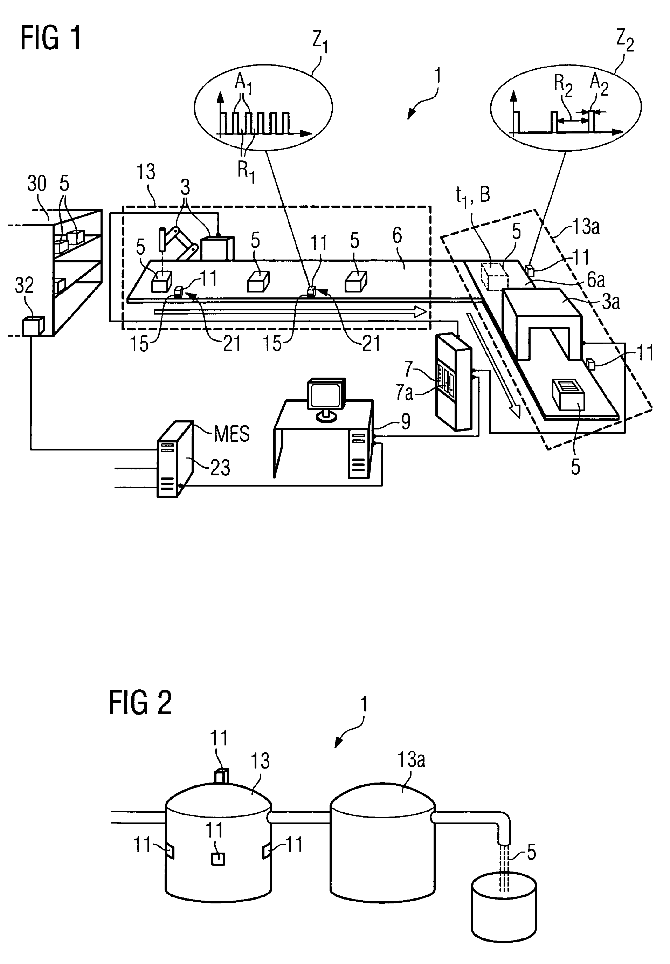

FIG 1 zeigt eine Fertigungseinrichtung 1. Die Fertigungseinrichtung 1 weist einen ersten Fertigungsabschnitt 13 auf. An den ersten Fertigungsabschnitt 13 schließt sich ein zweiter Fertigungsabschnitt 13a an. In den Fertigungsabschnitten 13, 13a werden Fertigungsschritte an einem Produktteil 5 durchgeführt. Produktteile 5 durchlaufen sequentiell die Fertigungsabschnitte 13, 13a. Eine Fertigungsmaschine 3 führt im Fertigungsabschnitt 13 ein Fertigungsschritt am Produktteil 5 durch. Eine Transporteinrichtung 6 befördert die Produktteile 5 durch den Fertigungsabschnitt 13 zum Fertigungsabschnitt 13a. Im Fertigungsabschnitt 13a werden die Produktteile 5 von einer Transporteinrichtung 6a transportiert. Sie durchlaufen dort einen weiteren Fertigungsschritt, durchgeführt von einer Fertigungsmaschine 3a. Drahtlose Sensoren 11 sind entlang sowohl des Fertigungsabschnittes 13 als auch entlang des Fertigungsabschnittes 13a angeordnet. Die Sensoren 11 weisen jeweils einen autarken Energiespeicher 15 auf. Die Sensoren 11 bilden zusammen ein Sensornetzwerk 21. Die Sensoren 11 sind hier als optische Positionssensoren ausgeführt, die durch Reflexion von aus einer Leuchtdiode entsendendem Licht die Position bzw. die Anwesenheit eines Produktteils 5 im Sensorbereich des Sensors 11 detektieren. Die Fertigungseinrichtung 1 weist eine Steuerung 7 auf, mittels derer die Fertigungsschritte im Fertigungsabschnitt 13 gesteuert werden. Eine weitere Steuerung 7a steuert den Ablauf der Fertigungsschritte im Fertigungsabschnitt 13a. Die Steuerungen 7, 7a sind mit einem Fertigungsdatensystem 9 verbunden. Über das Fertigungsdatensystem ist ein Betriebszustand der Fertigungseinrichtung 1 darstellbar. Das Fertigungsdatensystem 9 ist wiederum sowohl mit einem MES-System als auch mit einer Simulationsvorrichtung 23 verbunden. Das MES- bzw. das Simulationssystem 23 sind wiederum verbunden mit einem Lagerdatenerfassungssystem 32, welches den Lagerbestand eines Lagers 30 für Produktteile 5 erfasst.

Im Betrieb der Fertigungseinrichtung 1 werden Produktteile 5 aus dem Lager 30 zum Fertigungsabschnitt 13 transportiert. Nacheinander durchlaufen sie dort den Fertigungsabschnitt 13. Die Fertigungsmaschine 3 führt einen Fertigungsschritt an einem Produktteil 5 durch. Dieses Produktteil 5 wird sodann von der Transportvorrichtung 6 weiter transportiert. Dabei erfassen Sensoren 11 im bestimmten Bereich die Anwesenheit des Produktteiles 5. Anschließend wird ein Produktteil 5 mit der Transportvorrichtung 6a durch den Fertigungsabschnitt 13a transportiert und unterläuft in der Fertigungsmaschine 3 einen weiteren Fertigungsschritt. Auch hier erfassen Sensoren 11 in Erfassungsbereich der Sensoren die Anwesenheit eines Produktteiles 5. Ein Sensor 11 arbeitet in einem Aktivitätszyklus Z. ein Aktivitätszyklus Z zeichnet sich durch abwechselnde Aktivphasen und Ruhephasen aus. In einer Aktivphase emittiert der Sensor Licht um über eine mögliche Reflexion die Anwesenheit eines Produktteiles 5 zu detektieren. In einer Ruhephase zwischen zwei Aktivphasen emittiert der Sensor 11 nicht und verbleibt in einem Energiesparzustand. Folgen Produktteile 5 dicht aufeinander, so zeichnet sich ein Aktivitätszyklus Z1 dadurch aus, dass der Anteil von Ruhephasen R1 an einem Aktivitätszyklus Z kleiner ist als bei einem Aktivitätszyklus Z2, der eingestellt wird, wenn ein größerer Abstand zwischen zwei Produktteilen 5 besteht. Ein solcher größerer Abstand wird durch die Prognose eines Betriebszustandes zu einem späteren Zeitpunkt t1 vorhergesagt. Ein Sensor 11 im zweiten Fertigungsabschnitt 13a kann also in einem Aktivitätszyklus Z2 mit größeren Ruheanteilen dann versetzt werden, wenn für ein bestimmtes Zeitintervall keine Produktteile 5 im Bereich dieses Sensors 11 erwarten werden. Diese Prognose kann insbesondere durch das MES-System erfolgen. Dieses liefert Daten über dem Materialfluss und die Verfügbarkeiten der Fertigungseinrichtung. Wird etwa mittels des Lagerdatenerfassungssystems 32 festgestellt, dass keine Produktteile 5 im Lager 30 vorrätig sind, so kann daraus aus dem verbleibenden Produktteilen 5 in den Fertigungsabschnitten 13, 13a abgeleitet werden, dass eine längere Ruhephase für das Sensornetzwerk 21 folgen wird. Die Sensoren 11 des Sensornetzwerks 21 werden somit für diese Zeit in den energiesparenden Ruhemodus versetzt. Noch können solche Ruhephasen mittels der Simulationsvorrichtung 23 bestimmt werden. Diese kann den Ablauf in der Fertigungseinrichtung 1 simulieren. Neben zeitlich gröberen Daten, wie einer Verfügbarkeit von Produktteilen 5 im Lager 30 können somit auch zeitlich feinere Abstandsvariationen beim Durchlauf der Produktteile 5 durch die Simulation prognostiziert werden. Das Sensornetz 21 bzw. gezielt Sensoren 11 an bestimmten Positionen können somit in einen bedarfsgerechten Ruhezustand versetzt werden.

In FIG 2 ist eine Fertigungseinrichtung 1 für eine nichtdiskrete Produktfertigung dargestellt. Ein nicht-diskretes Produkt 5, z.B. eine Flüssigkeit, wird in einem ersten Fertigungsabschnitt 13 einem bestimmten chemischen Prozess unterworfen. Sensoren 11 erfassen dabei Prozesswerte, wie z.B. eine Temperatur oder einen Füllstand. Je nach Prozesszustand sind dabei zeitlich dichtere oder weniger dichte Messungen erforderlich. Durch Anpassung der Aktivität der Sensoren 11 an diesem Messanforderungen und den Betriebszustand werden auch hier energiesparende Ruhezustände für die Sensoren 11 maximiert.

Insgesamt ergibt sich somit eine deutliche Verlängerung der Lebensdauer der autarken Energiespeicher 15 der Sensoren 11. Gegebenenfalls wird erst durch diese energiesparende Ausführung eine Verwendung eines drahtlos Sensornetzwerkes wirtschaftlich sinnvoll oder technisch möglich. Die Fertigungseinrichtung 1 ist somit durch eine geringere Verkabelung und Flexibilität der Sensorpositionen besonders gut in Betrieb zu setzen und durch seltenere Wechsel der Sensoren 11 oder deren Energiespeicher 15 besonders wartungsarm.

## Patentansprüche

1. Fertigungseinrichtung (1), umfassend:
- eine Fertigungsmaschine (3) zur Durchführung eines Fertigungsschrittes in einem Fertigungsabschnitt (13) an einem Produktteil (5),
- eine Steuerung (7) für den Fertigungsabschnitt (13),
- ein Fertigungsdatensystem (9) zur Erfassung von Betriebszuständen der Fertigungseinrichtung (1),
- einen Sensor (11) zur Aufnahme eines Messwertes für die Steuerung (7),
wobei der Sensor (11) drahtlos mit einem autarken Energiespeicher (15) ausgeführt ist und in einem Aktivitätszyklus (Z) arbeitet, welcher Aktivphasen (A) und Ruhephasen (R) aufweist, **dadurch gekennzeichnet, dass** ein zeitlicher Ruheanteil (T) der Ruhephasen (R) am Aktivitätszyklus (Z) einstellbar ist und wobei die Einstellung des Ruheanteils (T) zu einem Betriebszeitpunkt (t₁) abhängig von einem aus dem Fertigungsdatensystem (9) abgeleiteten Erwartungs-Betriebszustand (B) zu diesem Betriebszeitpunkt (t₁) erfolgt.

2. Fertigungseinrichtung (1) nach Anspruch 1, **dadurch gekennzeichnet, dass** der Sensor (11) Teil eines Sensornetzwerkes (21), aufgebaut aus mehreren drahtlosen Sensoren (11), ist.

3. Fertigungseinrichtung (1) nach einem der vorhergehenden Ansprüche, **dadurch gekennzeichnet, dass** das Fertigungsdatensystem (9) Teil eines Manufacturing Execution Systems (MES) ist, welches Fertigungsdaten zum Materialfluss und Verfügbarkeiten der Fertigungseinrichtung (1) enthält, woraus der Erwartungs-Betriebszustand (B) ableitbar ist.

4. Fertigungseinrichtung (1) nach einem der vorhergehenden Ansprüche, **dadurch gekennzeichnet, dass** das Fertigungsdatensystem (9) mit einer Simulationsvorrichtung (23) verbunden ist, mittels derer aus einem aktuell vorliegenden Betriebszustand der Erwartungs-Betriebszustand (B) simulierbar und damit prognostizierbar ist.

5. Fertigungseinrichtung (1) nach einem der vorhergehenden Ansprüche, ausgelegt für eine diskrete Fertigung bei der Produktteile (5) nacheinander den Fertigungsabschnitt (13) durchlaufen.

6. Fertigungseinrichtung (1) nach Anspruch 5, bei dem der Sensor (11) als ein Positionssensor ausgeführt ist, durch den eine Position des Produktteiles (5) bestimmbar ist.

7. Fertigungseinrichtung (1) nach einem der Ansprüche 1 bis 4, ausgelegt zur Fertigung eines nicht-diskreten Produktteiles (5) bei der im Fertigungsabschnitt (13) ein kontinuierlicher Prozess durchlaufen wird, wobei der Sensor (11) zur Aufnahme eines Prozessmesswertes ausgelegt ist.

8. Verfahren zum Betrieb einer Fertigungseinrichtung (1), bei dem ein Produktteil (5), gesteuert über eine Steuerung (7), einen Fertigungsabschnitt (13) mit einer Fertigungsmaschine (3) durchläuft, wobei ein Fertigungsdatensystem (9) einen Betriebszustand der Fertigungseinrichtung (1) erfasst und wobei ein Sensor (11) Messwerte für die Steuerung (7) aufnimmt, wobei der Sensor (11) drahtlos mit einem autarken Energiespeicher (15) ausgeführt ist und in einem Aktivitätszyklus (Z) arbeitet, welcher Aktivphasen (A) und Ruhephasen (R) aufweist, **dadurch gekennzeichnet, dass** ein Erwartungs-Betriebszustand (B) der Fertigungseinrichtung (1) zu einem Betriebszeitpunkt (t₁) bestimmt wird und zu diesem Betriebszeitpunkt (t₁) abhängig vom Erwartungs-Betriebszustand (B) ein zeitlicher Ruheanteil (T) der Ruhephasen (R) am Aktivitätszyklus (Z) eingestellt wird.

9. Verfahren nach Anspruch 9, bei dem das Fertigungsdatensystem (9) Teil eines Manufacturing Execution Systems (MES) ist, welches Fertigungsdaten zum Materialfluss und Verfügbarkeiten der Fertigungseinrichtung (1) enthält, woraus der Erwartungs-Betriebszustand (B) abgeleitet wird.

10. Verfahren nach Anspruch 8 oder 9, bei dem das Fertigungsdatensystem (9) mit einer Simulationsvorrichtung (23) verbunden ist, mittels derer aus einem aktuell vorliegenden Betriebszustand der Erwartungs-Betriebszustand (B) simuliert und prognostiziert wird.

11. Verfahren nach einem der Ansprüche 8 bis 10, bei dem bei einem Betriebszustand (B), welcher eine höhere zeitliche Veränderung der Position oder der Eigenschaften des Produktteiles (5) aufweist, der Ruheanteil (T) niedriger ist, als bei einem Betriebszustand, welcher eine niedrigere zeitliche Veränderung der Position oder der Eigenschaften des Produktteiles (5) aufweist.
